(19) Europäisches Patentamt
European Patent Office
Office européen des brevets

(11) **EP 1 538 547 B1**

(12) **EUROPEAN PATENT SPECIFICATION**

(45) Date of publication and mention
of the grant of the patent:
**06.02.2008 Bulletin 2008/06**

(51) Int Cl.:
*G06K 9/00* (2006.01)    *G06T 5/00* (2006.01)

(21) Application number: **04078289.8**

(22) Date of filing: **03.12.2004**

(54) **Method and device for extracting skeletal data from image data**

Verfahren und Vorrichtung zur Skelettbilder Extraktion von Bilddaten

Méthode et dispositif d'extraction du squelette dans des donées d'image

(84) Designated Contracting States:
**AT BE BG CH CY CZ DE DK EE ES FI FR GB GR HU IE IS IT LI LT LU MC NL PL PT RO SE SI SK TR**

(30) Priority: **03.12.2003 NL 1024932**

(43) Date of publication of application:
**08.06.2005 Bulletin 2005/23**

(73) Proprietor: **Prime Vision**
**2628 VK Delft (NL)**

(72) Inventor: **Wilcke, Robert**
**2202 AV Noordwijk (NL)**

(74) Representative: **van Westenbrugge, Andries**
**Nederlandsch Octrooibureau**
**J.W. Frisolaan 13**
**P.O. Box 29720**
**2502 LS Den Haag (NL)**

(56) References cited:
**US-B1- 6 377 710**

- SHIH F Y ET AL: "A NEW SAFE-POINT THINNING ALGORITHM BASED ON THE MID-CRACK CODE TRACING" IEEE TRANSACTIONS ON SYSTEMS, MAN AND CYBERNETICS, IEEE INC. NEW YORK, US, vol. 25, no. 2, 1 February 1995 (1995-02-01), pages 370-378, XP000501499 ISSN: 0018-9472
- ARCELLI C ET AL: "Medial lines by parallelwise erosion of successive contour pairs" TENCON '92. ''TECHNOLOGY ENABLING TOMORROW : COMPUTERS, COMMUNICATIONS AND AUTOMATION TOWARDS THE 21ST CENTURY.' 1992 IEEE REGION 10 INTERNATIONAL CONFERENCE. MELBOURNE, VIC., AUSTRALIA 11-13 NOV. 1992, NEW YORK, NY, USA,IEEE, US, 11 November 1992 (1992-11-11), pages 66-70, XP010067537 ISBN: 0-7803-0849-2
- LAM L ET AL: "THINNING METHODOLOGIES-A COMPREHENSIVE SURVEY" IEEE TRANSACTIONS ON PATTERN ANALYSIS AND MACHINE INTELLIGENCE, IEEE INC. NEW YORK, US, vol. 14, no. 9, 1 September 1992 (1992-09-01), pages 869-885, XP000306454 ISSN: 0162-8828

EP 1 538 547 B1

## Description

### Field of the invention

The present invention relates to a method and device for extracting skeletal data from image data.

In the specialist field of image processing and pattern recognition so-called skeletal algorithms have already been used for many years. The aim here is usually a description of the characters of written and/or printed text such that the subsequent image analysis and recognition is less complex. Since the emergence of artificial neural networks the recognition of characters has largely been solved and the interest in these algorithms has decreased to some extent. However, new problems, such as the recognition of text in joined-up writing (cursive script) and segmentation of text that has been written across data entry boxes can actually be solved well only if we have access to the infinitely thin writing lines and intersections' on which the binary image of the written or printed text is based. Obtaining a 'skeleton' with good characteristics is therefore extremely important.

### State of the art

US Patent US-B 6 377 710 describes a method and system for extracting the skeleton of a binary figure by means of contour-based erosion. With this method one pixel (towards the inside) in each case is removed from a contour of an image if specific conditions are met, as a result of which ultimately a skeleton of complete pixels joined to one another remains.

The article 'A New Safe-Point Thinning Algorithm Based on the Mid-Crack Code Tracing', by F.. Shih et al., IEEE Transactions on Systems, Man and Cybernetics, 25(1995) February, No. 2, pp 370-378 discloses a thinning algorithm for providing from a binary image, a one-pixel wide skeleton representation as output. In subsequent iterative steps, each pixel is represented by a code based on analysis of an associated 3x3 pixel window from the original image. Deletion of pixels in the image is determined by classifying the associated 3x3 pixel window using a look-up table. In each iteration, only boundary pixels are processed, i.e. pixels at the edge of a shape in the (processed) image.

The article 'Medial Lines by Parallewise Erosion of Successive Contour Pairs' by C. Arcelli et al., IEEE Region 10 Conference, Tencon 92, pp 66-70 discloses an iterated parallel thinning algorithm using 3x3 local operations. The disclosed method allows pixel erosion in an image from two directions simultaneously.

Such skeletal algorithms have already been known for a long time, including in the field of character recognition. The majority of algorithms here are based on erosion of the pixel image. With this procedure 'black' pixels are eliminated step by step on condition that the structure of the image may not be interrupted or changed as a result of the erosion. Substantial accelerations are sometimes achieved by contour-based erosion of the pixel image, as in the cited US Patent US-B 6 377 710. In this case far fewer pixels have to be viewed. The many algorithms that have been described in the literature are always found to have three or more of the following disadvantages:

1. The skeleton output is defined as a pixel image with a 'thickness' of 1 pixel. This is a debatable definition because of the definition of connectivity. In some cases a binary pattern is not further altered by the existing erosion algorithms because of the said condition. This can lead to a skeleton that in some locations clearly has a thickness that is greater than 1 pixel. However, the skeleton output usually does comply with the 1 pixel thick requirement and 'nodes' with three or at most four 'branches' arc produced.

2. In order to obtain a description in the form of nodes with linear branches between them (infinitely thin and in general not in straight lines) for further processing of the skeleton output, for example for character recognition, the skeleton output mentioned under point 1 must also be subjected to a separate process. Such a process is certainly not trivial.

3. As a consequence of the principle that in each case complete pixels are 'eliminated' from the pattern, the known erosion algorithms by definition provide an asymmetrical skeleton output. In this context consider, for example, a vertical linear pattern with a thickness of 2 pixels. The one algorithm will, for example, eliminate the pixels on the left whilst another algorithm will specifically eliminate the pixels on the right. In both cases there can be said to be an asymmetrical skeleton. In the case of this simple example the asymmetry is, of course, not a nuisance, but in the case of more complex structures the result looks 'incorrect' and, for example, the location of the nodes conforms 'visually' less well with the underlying actuality than in the case of a symmetrical skeleton.

4. A large number of skeletal algorithms are rotation-dependent, that is to say the skeleton output changes when the binary pattern in the image memory is rotated through 90˚ or multiples thereof. Sometimes even the number of branches varies. And this is the case while, in terms of shape, the image remains precisely the same even at pixel level.

5. The algorithms that are based on contour-controlled erosion of the pixel image are sensitive to the choice of the origins on the outer and inner contours of the pattern. A change in the sequence in which the outer and inner contours are dealt with in each erosion step in general also produces a different skeleton output. The underlying cause of this is actually the same as that of the phenomenon mentioned under point 3.

**Summary of the invention**

The present invention aims to provide a method and device that makes it possible to extract characteristic features from image data, for example for handwriting recognition, that reduces or eliminates the disadvantages of the state of the art that have been mentioned.

According to a first aspect of the present invention, a method is provided for obtaining an output in skeleton form that is a simplified representation of a pixel image with pixels joined together. The method can also be used for a set of images of this type (such as a 'five with a detached bar') and comprises:

converting the pixel image with pixels joined together into a contour listing, where a contour listing consists of one or more series (multiple series in the case of one or more inner contours) of two-dimensional contour points where the distance between successive contour points is one pixel width;

doubling the number of contour points by defining an additional point between two successive contour points, as a result of which the distance between two successive contour points is half a pixel width;

repeated (also termed iterative) stripping of the image described by the contour listing by repeated generation of a new contour listing until the new contour listing describes an image that has zero thickness throughout and thus describes the output in skeleton form,

wherein stripping is done by generating zero, one, two or three points in the new contour listing for each contour point, depending on said contour point, the preceding contour point and the following contour point in the contour listing and depending on the other contour points in the contour listing which have the same two-dimensional coordinates with the respective associated preceding contour point and following contour point,

wherein said new points either have the same coordinates as the old contour point (at the locations where stripping may not be done) or have been shifted over a distance of half a pixel width in the X direction and/or the Y direction towards the inside of the image described by the contour listing.

By using this method an eroded contour image is obtained, where the erosion process is symmetrical. This is beneficial for the quality of the result obtained, as a result of which a better recognition result is obtained in further processing operations.

In a further embodiment a code array with a specific range of two-dimensional addresses is stored. The range is at least as large as the range of the two-dimensional coordinates of all image patterns that occur (described by the doubled contour listing obtained in the earlier steps). In this embodiment stripping comprises:

- working through the series or number of series of contour points in the contour listing;
- depending on the value of the situation indicator (that starts at the initial value 0) already present in the code array at the address belonging to the contour point and the preceding and following contour point in the series, determining an updated situation indicator and storing this at the same address;
- again working through the contour listing point by point and generating a new contour listing on the basis of the respective situation indicators in the code array. In the case of four specific situation indicators (of the 15) there arc in each case two 'shift actions' instead of one. Which of the two has to be chosen is in this case dependent on the contour direction in the contour point concerned, that is to say the direction from point k to point k+1. The direction from point k-1 to point k can also be used as alternative supplementary information. By using such a code array it is possible to perform the erosion process in a very efficient manner in the iterative process.

In a further embodiment the contour points are located on a two-dimensional grid, the grid spacing corresponding to half a pixel width and the situation indicator being a hexadecimal code. By using such a grid it is possible effectively to strip the contour in steps of half a pixel width, as a result of which a symmetrical process is produced and stripping can be stopped in time.

Small irregularities can arise with the erosion or stripping process according to the present invention. In a further embodiment of the present invention the method furthermore comprises trimming the new contour listing produced after a stripping operation, wherein trimming comprises:

assessing whether an origin produced during this stripping operation is an essential or a non-essential origin and removing the non-essential origins from the series or number of series of contour points in the contour listing,

wherein an origin is a contour point for which the immediately preceding and immediately following contour point in the series have the same coordinates.

In yet a further embodiment each contour point in the contour listing is assigned an iteration number that indicates the iteration pass in which the contour point concerned was generated for the first time. The iteration number is no longer incremented if the generated contour point is a copy of the old contour point. This provides (local) information on the erosion process, which can be used efficiently in further processing.

In a further embodiment assessment of whether an origin is an essential or a non-essential origin is dependent on one or more preceding and one or more following contour points in the series. In terms of details provided, the erosion process can be optimised as a result, for example depending on the application (separate characters, joined-up characters, ...)

In one embodiment of the present invention trimming comprises:

working through the series of contour points;
depending on one or more preceding and one or more following contour points from the series or number of series of contour points, assigning a trim indicator to the contour point and to one or more preceding and/or following contour points;
working through the series of contour points again and constructing a new series of contour points on the basis of the trim indicator. The trim indicator is incorporated in the contour listing so as in such a way to perform the present method in an efficient manner.

For further processing of the output in skeleton form that is obtained it is advantageous to make the output available in a form that is easy to process further. To this end in yet a further embodiment the method comprises transforming the contour listing made up of the series or number of series of contour points with associated image with zero thickness into a listing of the origins and nodes and branches between the origins and nodes in said image.

The transformation is carried out advantageously and efficiently in accordance with yet a further embodiment of the present invention. In this embodiment transformation comprises:

maintaining a count in the code array of two-dimensional addresses which indicates how often a specific two-dimensional coordinate occurs in the contour listing that represents the image of zero thickness;
extracting a branch by storing successive contour points in the series for which the count in the code array at the associated two-dimensional address is two, supplemented by branch points, the branch points being formed by the predecessor of the first point and the successor of the last point (since a branch starts and ends at a special point, these two points belong to it);
storing special contour points from the series for which the count in the code array is one or more than two. If the count is one, the contour point is an origin, if the count is two the contour point is then part of a branch and if the count is greater than two the contour point is a node.

In a further embodiment an extracted branch for which the first two contour points are coincident with the last two contour points of a branch already stored is not stored. The reason for this is to prevent a branch being stored twice (in both pass directions). Likewise, when storing the special points, the points that have a two-dimensional coordinate that has already been stored are not stored in the list of special points.

For further processing of the output in skeleton form from the present method, in yet a further embodiment an extracted branch is spatially filtered, for example by determining a running average of the respective two-dimensional coordinate values.

In a further aspect the present invention relates to a device for obtaining an output in skeleton form that is a simplified representation of a pixel image with pixels joined to one another, comprising:

a detector for capturing the pixel image;
processing means that are connected to the detector, wherein the processing means are equipped for:

converting the pixel image with pixels joined to one another into a contour listing, where a contour listing consists of one or more series of two-dimensional contour points where the distance between successive contour points is one pixel width;
doubling the number of contour points by defining an additional point between two successive contour points, as a result of which the distance between two successive contour points is half a pixel width;
repeated stripping of the image described by the contour listing by repeated generation of a new contour listing until the new contour listing describes an image which has zero thickness throughout and thus describes the output in skeleton form,

wherein stripping is done by generating zero, one, two or three points in the new contour listing for each contour point, depending on said contour point, the preceding contour point and the following contour point in the contour listing and depending on the other contour points in the contour listing which have the same two-dimensional coordinates with the respective associated preceding contour point and following contour point,

wherein said new points either have the same coordinates as the old contour point or have been shifted over a distance of half a pixel width in the X direction and/or the Y direction towards the inside of the image described by the contour listing.

In a further embodiment the processing means are furthermore equipped to perform the method in question.

By means of the present invention advantages can be achieved that are comparable to the abovementioned advantages with regard to the present method.

In yet a further aspect the present invention relates to a computer program product that contains computer-readable code, wherein, after loading in a computer, the computer-readable code provides the computer with the functionality of the present method.

**Brief description of the drawings**

The present invention will now be discussed in more detail on the basis of a number of illustrative embodiments, with reference to the appended drawings, in which

Fig. 1 is a simplified block diagram of a character recognition system in which the skeleton process according to the present invention is used;

Fig. 2 is flowchart of one embodiment of the present method;

Fig. 3 shows, diagrammatically, a contour listing as used in one embodiment according to the present invention, where the series of two-dimensional coordinates (X and Y) has been expanded by the iteration number and the trim label for the contour points concerned;

Figs 4a to 4l show examples of possible situations that can arise during the stripping process according to one embodiment of the present invention;

Fig. 5 is an example of a contour processed in accordance with one embodiment of the present invention;

Fig. 6 is an example of a specific situation that can arise with one embodiment of the stripping process in question;

Fig. 7 shows examples of origins formed during the stripping process;

Fig. 8 shows examples of a few essential origins, where the contour points k-1 and k+1, and k-2 and k+2, respectively, have the same coordinates per pair;

Fig. 9 shows examples of a few non-essential origins;

Fig. 10 shows examples of a few further non-essential origins;

Fig. 11 shows examples of a few essential origins, where the contour points k-1 and k+1, k-2 and k+2, and k-3 and k+3, respectively, have the same coordinates per pair;

Fig. 12 shows examples of essential origins, where the contour points k-3 and k+3 are not coincident;

Fig. 13 shows examples of origins to be retained;

Fig. 14 shows examples of special origins;

Fig. 15 shows examples of origins to be deleted;

Fig. 16 shows an example of a skeleton obtained using the present skeleton method and based on the pixel image shown;

Fig. 17 shows an example of the method for smoothing branches obtained using the present method, and in particular mirroring of contour points close to special points;

Fig. 18 shows the example in Fig. 16 after filtering of the branches using a seven-point filter.

**Detailed description of illustrative embodiments**

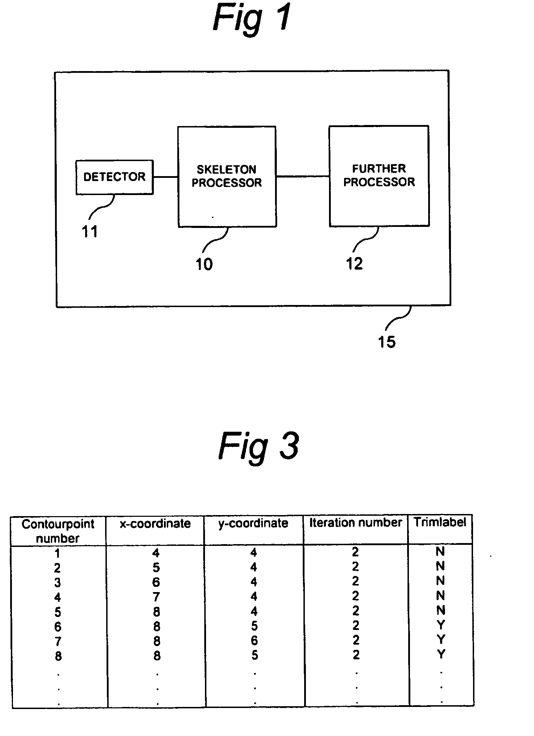

The present invention can advantageously be used in, for example, a system for the recognition of handwriting or characters, as is shown in a simplified embodiment thereof in Fig. 1. The recognition system 15 has a detector 11, such as a CCD camera, which records a digital pixel image of, for example, an envelope. The pixel image is sent to a skeleton processor 10 that is connected to the detector 11 and is equipped to embody the present invention by generating a skeleton description associated with the pixel image. The skeleton description is furthermore sent to a further processor 12 that is connected to the skeleton processor 10 and performs the further recognition and processing (for example printing a code).

The terms skeleton processor 10 and further processor 12 are intended to indicate each system in software, hardware or a combination thereof that is capable of performing the associated function. These can be individual computer systems (centralised or distributed) based on microprocessor technology with associated peripherals, but also elements specifically suitable for said function, such a digital signal processors.

The complete process that ultimately leads to a skeleton described by means of branch points and origins (also termed end points) with (smooth) branches running evenly between them, consists of four main processes that will be described in detail below.

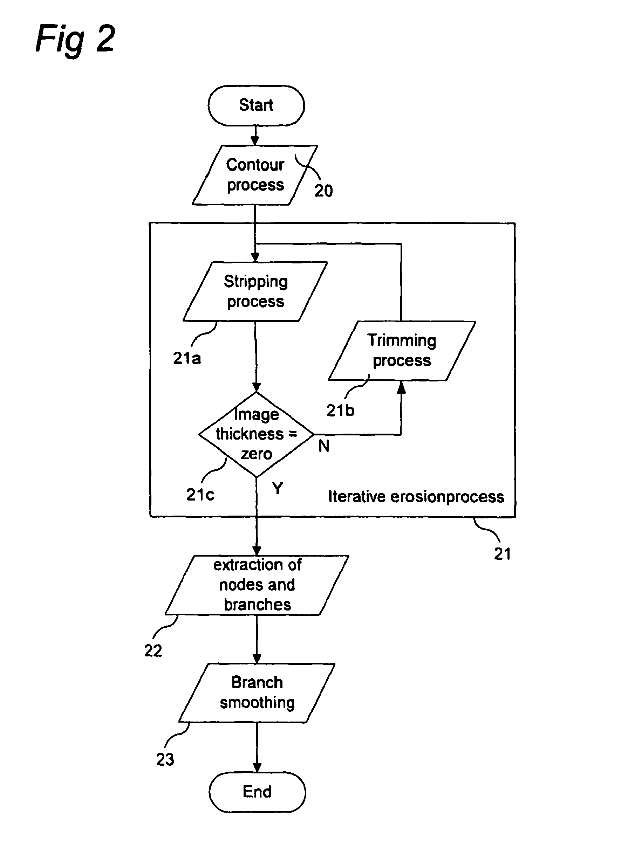

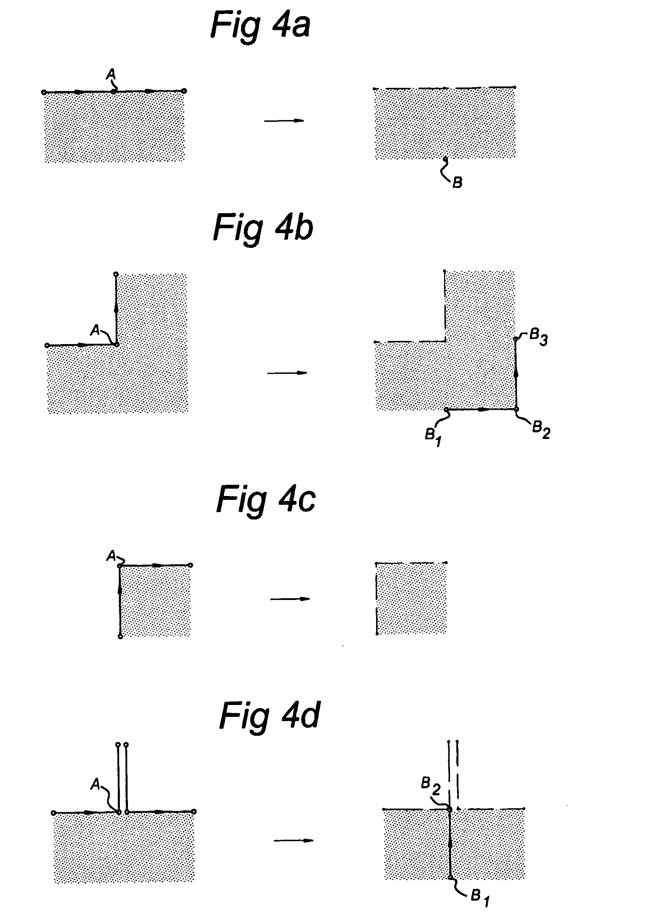

A flowchart that shows the entire process is shown in Fig. 2. The first main process is a contour process 20 that produces a first contour listing that is the input for the actual skeleton process. One example of a contour listing is shown in Fig. 3. The pixel image generated by the detector 11 is converted by the skeleton processor 10 with the aid of the contour process 20 into a contour listing consisting of one or more series of two-dimensional contour points (more than one if there are inner contours), for example in the form of pairs of coordinates (X and Y). A single series of two-dimensional contour points is also referred to as a (closed) contour polygon. In this first contour listing in our case the contour polygons are 'rectangular' and the distance between two successive contour points is precisely one pixel width. A binary image consisting of only one pixel, for example, gives rise to a contour polygon consisting of four contour points. The contour listing used here thus consists of the list(s) of the two-dimensional coordinates of the successive contour points. This is in contrast to a list or lists of successive directions (the so-called 'chain code') that is usually used. Immediately after conversion of the binary image the number of contour points in the contour listing is doubled by modifying the coordinate system (X and Y values multiplied by two) and incorporating contour points located halfway between each original pair of contour points. The distance between two successive contour points is then precisely half a pixel width.

The second main process is an iterative erosion process 21, consisting of the sub-processes 21a and 21b incorporated in a loop. The first sub-process in the loop is the stripping process 21a.

After completion of the iterative erosion process 21 (the loop) the provisional skeleton is described by the contour that remains when all the black has been 'stripped away' from the binary image in a symmetrical manner. This is effected by shifting the contour function(s) (in this case closed polygons, rectangular only at the start with eight possible directions further in the process) 'inwards' over a distance of half a pixel width per stripping operation in stripping process 21a. Such a shift over a distance of half a pixel width is possible by means of the abovementioned doubling of the number of contour points. The process of shifting inwards is 'prohibited' at those points where the image has become infinitely thin (the locations where precisely all the black has been stripped away in the previous stroke), i.e. at those points where the contour 'touches itself. In fact, part of the skeleton has already formed at these locations. Establishing that the contour touches itself is effected by counting how often the grid points in the two-dimensional plane (with a grid spacing of half a pixel width) is 'landed on' by the contour. Because the shifts of a half pixel width are used in the processing, it is guaranteed that the shifting contour always touches itself first before it would pass beyond itself. In other words, stripping can be stopped in time at the skeleton points already formed. The process involving inward shifting of the contour stops when there is no longer any black area anywhere between the (closed) contour function(s). The image described by this 'final contour' has then become infinitely thin. In contrast to the situation in existing algorithms, the original pixel image is not used in the above erosion process. It is also clear that the output from the iterative erosion process 21 (the loop) is not a pixel image but the contour description or listing of an infinitely thin image.

If the skeleton has not yet been completely formed (decision block 21c, image thickness = 0), the trimming process 21b takes place immediately after each stripping process 21 a, as shown in Fig. 2.

Without the trimming process 21b, the provisional skeleton (that is the final contour mentioned above) would in general also contain a number of small branches on completion of the iterative erosion process. Frequently these branches arc non-essential for the structure of the binary pattern. In fact, all skeletal algorithms are troubled by this phenomenon to a greater or lesser extent, depending on the 'trimming measures' that are used. Because in the present process erosion takes place in steps of half a pixel at a time, no single detail is lost and each pixel that protrudes gives rise to the production of a so-called origin, that is to say the start of a new branch. Fairly frequently such an origin yields a non-essential branch. A separate trimming process 21b that is based on an explicit list of origins that are not allowed to generate a new branch is therefore incorporated in the iterative erosion process 21 in question. With this procedure after each stripping operation 21a all newly generated origins of the new contour that has been shifted inwards are tested and a trim indicator is recorded in the case of each new origin. Those origins that have a 'form' that is included in the said list are then removed from the contour description concerned. The list is made up in such a way that skeletons that can be used in practice and do not have too many or too few branches are produced. If required, the list can be expanded with more forms for non-essential origins in order to obtain more extensive trimming. With this procedure a larger neighbourhood around the contour must then be examined, as a result of which the computing time will increase. However, in the present case this increase is not quadratic, as in the case of the customary skeletal algorithms where for more extensive trimming a larger two-dimensional neighbourhood for each pixel to be eliminated has to be assessed. Instead of working with a list of forms, it is also possible to work with some trimming criterion or other based on the 'contour neighbourhood' of an origin, this neighbourhood being optionally filtered (smoothed), for example by means of regression. The trimming 21b described is active after each stripping process 21a in the iterative erosion process 21 (the loop in Fig. 2).

Separate trimming afterwards, i.e. after completion of the iterative erosion process, is an alternative option.

Such a process is not inconceivable because in the present case the original pattern thickness is still known at all branch points, so that, in principle, the original form of each branch can still be assessed.

After it has been established in decision block 21c that the generated contour listing describes an image of zero thickness (the contour has then not been shifted any more at any point), the process is further continued with the extraction of nodes and branches (main process 22).

One characteristic of the output from the iterative erosion process 21 of the present process is that the transformation to a 'second' description by means of nodes and branches is easy. The contour listing produced is, as it were, duplicated: when working through said final contour the branches to be produced in the final skeleton are then passed twice. To put it simply, it is then necessary only to eliminate half. As has been stated, in the stripping process 21a use is made of a two-dimensional code array by means of which, inter alia, it is possible to count how often the contour lands on a specific two-dimensional coordinate. If such counting is performed with the final contour, it is then known after completion which contour points pass an origin (pass once) and which points pass an intersection (or a node) (pass three to a maximum of eight times). All other two-dimensional coordinates that the contour lands on are passed precisely twice and these are now the 'internal' points of the branches that are located between the 'special' points (origins and nodes). By working through the final contour once more after said count the complete skeleton description of all special points and branches can be generated.

In principle, the skeleton description formed in this way is a usable description where the branches formed, which are located between the special points, are described by the sequence of the two-dimensional coordinates of the grid points that are passed if the branches are worked through in a direction to be selected. In this case the points are located on a grid that is twice as fine as the original grid because of stripping by half a pixel width each time. However, a disadvantage of the skeleton description formed in main process 22 is that the small branch elements, that is to say the bits of line from point i to point i+1 'have' only eight directions. For certain purposes it is better to have access to a branch description that runs somewhat more 'smoothly', for example for deriving characteristics in which angular directions play a role. A final main process 23 has therefore been designed where the special points stay where they are but the intermediate branch points are 'shifted' by filtering in such a way that smoothly running (smooth) branches are produced. The smoothing or filtering process 23, which is to be described in more detail below, has an adjustable strength, where the highest strength produces the smoothest branches. The principle used is a so-called running average over a selectable number of branch points, where keeping the special points static can be achieved by 'mirroring' the branches to be filtered at said special points. For the abovementioned purpose, smoothing branches, in principle all known spatial filtering methods for describing a series of points in a flat plane can be used.

It will be clear to those skilled in the art that the first two main processes 20 and 21 together can be used as a separate entity in the complete procedure of character recognition, with the advantages already mentioned in the preamble.

The mode of operation of the present invention and in particular of the various main processes and sub-processes will be discussed in more detail in the example below.

The process starts with determination of the contour description of the binary pattern. Here the contour description takes place with rectangular contour polygons where the distance from point k to point k+1 is always precisely one pixel width. As already discussed above for contour process 20, the number of contour points is doubled by incorporating an additional point halfway between each two successive contour points. This new contour description then makes steps of half a pixel width in each case. Furthermore, we choose the scale for the two-dimensional coordinates such that the 'contour points halfway' are also on an integer grid. This is convenient because each two-dimensional position or coordinate then corresponds to the same position (two-dimensional index) in a two-dimensional code array. This code array thus has the same number of addresses as the number of grid points (with a grid spacing of half a pixel width) in the two-dimensional plane of a region that is sufficiently large to describe all patterns that occur. The code array is, in fact, an image memory of hexadecimal (4-bit) memory elements that is twice as fine (both in the X direction and in the Y direction). Now, each memory element does not represent a pixel that is or is not 'black', but represents the X-Y locations where the contour passes or does not pass one or more times. With this procedure the way in which this passage takes place is established by giving the memory element a specific value, the so-called situation indicator (0 = does not pass; the values 1..15 indicate a certain classification of the various situations). The value at each address of the code array is set to 'zero' once and 'left' at zero each time further on in the skeleton process.

The first stripping operation thus starts with the abovementioned 'doubled' contour description and with all memory elements in the code array set to zero. In each stripping operation (one call in the stripping process 21a) of the iterative erosion process 21, the last contour description at that point in time generates a new description. This new contour description then represents the contour shifted one step (½ pixel) further inwards.

According to a specific action, during this operation the 'old' contour points generate at least zero and at most three points of the new contour. What precisely has to be generated by each point of the old contour is dependent on the local situation at that point. In this context we want to know, inter alia, whether a skeleton point has already been produced at that location in the two-dimensional plane or not. If so, the contour may no longer be shifted at that point and a point with the same coordinates as the old (skeleton) point is generated in the new contour description. Therefore, before the contour is shifted the contour is first worked through once, where the situation at all grid points that the contour lands on is recorded in code in the two-dimensional code array. A hexadecimal code is found to be sufficient to differentiate the various situations for which, in each case, a different 'shift action' applies for the two-dimensional contour point concerned. The two-dimensional code array or count array is therefore an 'economical' array of 4-bit elements. In principle, a code that is even somewhat more economical would also suffice, but the code chosen makes efficient implementation possible.

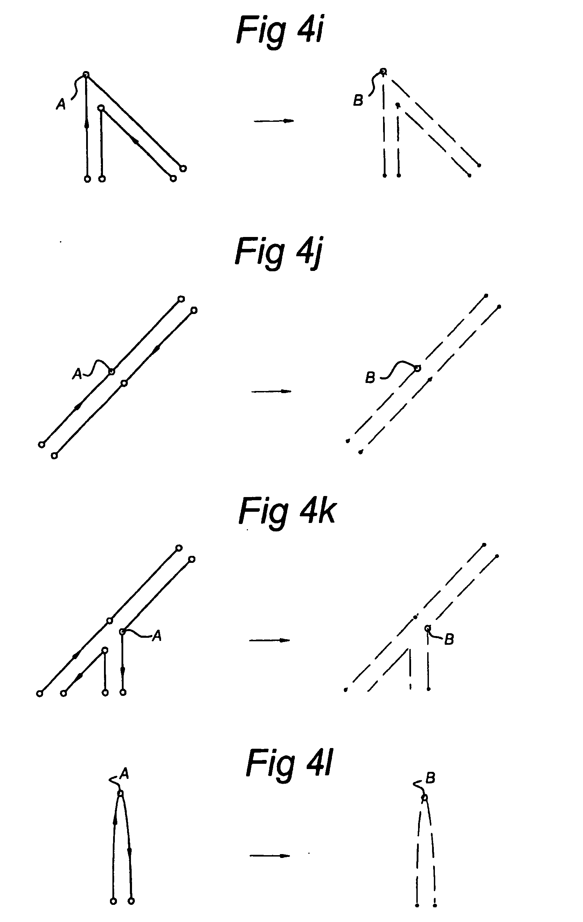

The various possible situations for the points of the old contour with the associated generated points of the new contour arc shown in Figures 4a to 4l, which have been drawn on a grid with a spacing of half a pixel width.

A simple situation where the entire contour 'lands on' the two-dimensional location of contour point A only once and the contour does not bend at point A (goes straight on) is shown in Figure 4a. The code mentioned has been so designed that it can be 'seen' from the value of the code array at the two-dimensional address of point A that this specific situation applies. The action in this case is simple. The point A generates the point B, that has been shifted half a pixel inwards, in the new contour description. If we rotate the situation in Figure 4a three times through 90°, we then obtain three similar situations with a similar action. These three situations can also be recognised from the code recorded at the relevant two-dimensional address in the code array.

A situation where the two-dimensional location is also landed on only once and where the point A in the old contour generates three points B1, B2 and B3 in sequence in the new contour description is shown in Figure 4b. This situation is now also recognisable from the code recorded at the relevant two-dimensional address in the code array. And it is now also once again the case that rotating three times through 90° gives three similar situations with a similar operational rule. Up to now four 'straight on' situations and four 'left-turn' situations have been described. By this means eight values of the hexadecimal code have thus been used (plus the value 0).

For the situation in Figure 4c and the three situations produced therefrom by rotation, only one value is used, specifically one 'right-turn' value irrespective of the rotation. The rule for these four situations is that the point A in the old contour does not generate a point in the new contour description. Therefore, there is no new point to be found on the righthand side in Figure 4c. The reason why the point A does not have to generate a point here is the fact that at the location shifted inwards a point has always already been generated in the new description by the 'predecessor' of point A.

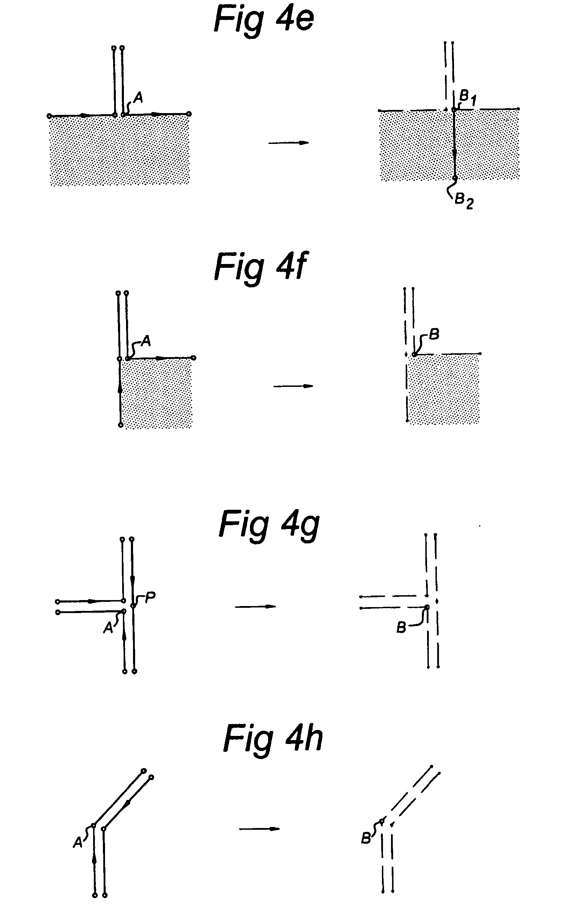

Two cases with a somewhat more complex action, where point A generates two points B1 and B2 in sequence, are shown in Figures 4d and 4e. In both cases the location of point A has been landed on twice by the contour and a skeleton point has already been produced at that location and has been done in the specific manner shown in Figures 4d/e. The code at the location of point A is the same in both cases since in both cases there is the same local situation. Which action has to be chosen (4d or 4e) is determined by the contour point A: the point A where the skeleton already formed is 'entered' (Figure 4d) or the point A where the skeleton already formed is 'left' (Figure 4e). In both cases the 'contour/skeleton point' A is repeated in the new contour description. In Figure 4d this is B2 and in Figure 4e this is B1. The local situation in Figures 4d/e again gives similar situations by rotating three times through 90 degrees. Once again four values of our hexadecimal code are used to be able to differentiate these four local situations. By also examining the contour point A itself, the various situations thus provide eight actions.

The last two values of the hexadecimal code are used for all other situations that can arise during the iterative erosion process. There are then contour/skeleton points of the 'simple' type that have already been produced and that merely repeat (copy) themselves in the new contour description. Thus, they have to generate only one point with the same coordinates. A few examples of situations of this type, which arise increasingly frequently as the final situation of the iterative erosion process is neared, are shown in Figures 4f to 4l. All these figures are situations that can gradually arise in the process. In the figures where part of the skeleton has already been produced, for reasons associated with drafting technique the skeleton has been given a finite thickness so that the 'forward direction' and the 'return direction' of the skeleton contour can be recognised. The skeleton points concerned have also been 'stretched'. For example, in Figure 4g the three contour points drawn in the centre in fact have the same two-dimensional coordinates. In 'skeleton language' a triple branch has been produced in this location. (Incidentally, the same drafting principle has already been used in Figures 4d and 4e).

In Figure 4j a situation is recorded where the two-dimensional location of point A is passed twice by a contour 'at 45 degrees' going straight on. Such a situation where said location is landed on only once, for example by point A, appears impossible to prevent in the iterative erosion process. The codes 'straight on', 'left turn' and 'right turn' in Figures 4a to 4c plus their rotations are therefore also explicitly reserved for directions along the grid. In the case of rotations through approximately 45 degrees or approximately 135 degrees it is thus guaranteed that there are situations where a skeleton point has already been produced and the location concerned is thus guaranteed to be passed more than once. In such locations the contour may thus no longer be shifted and the contour points being passed merely have to repeat themselves in the new contour description.

In Figure 4l an origin for a skeleton is shown as a final example. The skeleton contour passes said point only once. Here again the contour may no longer be shifted and the point A thus has to be repeated in the new contour description. As long as the contour may still be shifted in other locations, generation of the new contour descriptions simply continues (the 'loop process' is not yet complete). However, as soon as no further shifting is possible anywhere, the erosion stops and this main process is thus complete (no more shifts allowed signifies 'image surface zero').

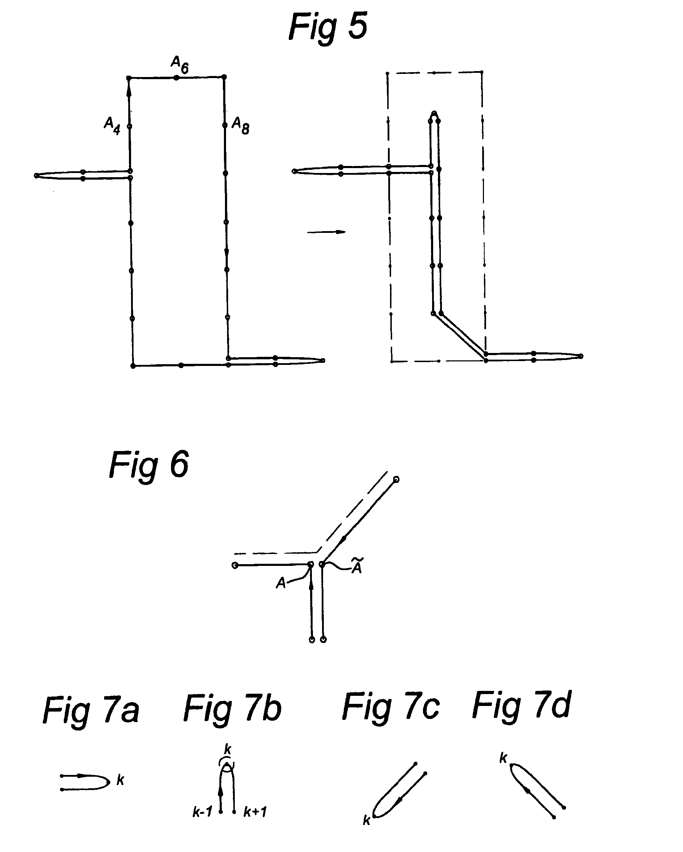

However, there is another point that requires attention. Specifically, if a new contour description is generated in accordance with the above 18 actions (4 + 4 + 1 + 8 +1), contour points with the same two-dimensional coordinates are then sometimes generated immediately after one another. One example can be found in Figure 5, where the complete set of new contour points generated is shown. The contour description that is associated with this is not a correct polygon since the top three consecutive points have the same coordinates. This problem can be solved, inter alia, by, in addition to the situation in Figure 4c, distinguishing the other situations of contour points that also may not generate a point in the new contour description.

An alternative solution which has been chosen in this implementation is as follows. During generation of the new description, a check is made for each point that would have to be generated according to the actions to determine whether the point generated immediately beforehand has the same two-dimensional coordinates. If so, the new point to be generated is then simply skipped.

As stated, the local situation in the grid points concerned is recorded in code each time, before the contour is shifted one step further. For this purpose the contour is worked through once and the code array is updated. With this procedure the relevant elements in the code array start at a value of zero. All contour points are then worked through and during this operation the array elements belonging to said two-dimensional locations in each case acquire a new value that is dependent on the contour path at the contour point concerned and on the value that the array element now already has. If the value of the element is still zero, then that indicates that we are passing this location for the first time and in this case the following values are assigned:

- The value 1 to 4 for the 4 'left-turn' contour paths (Fig. 4b + rotations).
- The value 5 to 8 for the 4 'straight on' contour paths (Fig. 4a + rotations).
- The value 9 for the 4 'right-turn' contour paths (Fig. 4c + rotations).
- The value 15 for the pattern that belongs to an origin (a 180 degree bend in the contour / see Fig. 4l).
- The value 14 for all other contour paths. It is then guaranteed that at that location there is a skeleton point of the 'simple' type that has already been produced, that is to say a point that merely repeats itself. Thus, even if said location is landed on for the first time it is certain that it will be returned to at least once more in a manner that involves 'skeleton formation'. Examples can be found in Figures 4h to 4k, where, for example, point A is the first to land on the two-dimensional location concerned.

The four code values 10 to 13 are reserved for the local situation in Figures 4d/e and the three that are obtained therefrom via rotation. It is clear that such a value is generated at the point in time when the contour passes the location concerned for the second time. At that point in time the code must have one of the values 1 to 4 ('left turn'). If the 'contour bend' is now once again a 'left turn' on said second passage, one of said values 10 to 13 is generated, depending on the precise location of the two 'left-turn bends' with respect to one another. If this is not the case, then once again it is guaranteed that there is a skeleton situation of the simple type and the array element concerned acquires the value 14. In the next stage of the stripping process (the actual stripping) it is then known that the contour points that pass this location then only have to repeat themselves. One example where the code 14 has to be generated is shown in Figure 6, where the point Ã is the second contour point that lands on the location concerned. In this case it is thus already known at that point in time that the contour will pass this location at least once more, for example via the dotted line drawn. The skeleton point concerned is thus a skeleton point of the simple type. In contrast, as can be seen in the actions in Figures 4d and 4e (+ rotations) the situations with code values 10 to 13 represent skeleton points of a less simple type that have already been produced. These are then skeleton points where the passing contour points not only repeat themselves but also generate a new point.

What happens when a location is passed for the second time and the code at that point in time has one of the values 1 to 4 has been described above. However, if the value during said second passage falls in the range 5..8, 9 (4x straight on, 4x right turn), the code array at that location then acquires the value 14. In this case also it is guaranteed that there is a skeleton point of the simple type. If a location is landed on and the code is already at one of the values 10 to 13, it is then known that this point is being passed for the third time and in this case also the code at that location is set to 14 again. There is then, for example, the situation in Figure 4g where the point P is the third to pass the location. Finally, the value of the code is no longer changed if this is found to be already at 14 or 15, irrespective of how often the location concerned is still landed on. In the final situation of the iterative erosion process, the coding process thus produces only values 14 and 15.

Summarised briefly, the four rules of the coding process (the first operation of the stripping process), which has been described in detail above, are summarised below:

1. Current value 0, then new value 1..4, 5..8, 9, 14 or 15, depending on the contour bend and direction.
2. Current value 1..4, then new value 10..13 or 14, depending on the contour bend and direction.
3. Current value 5..8, 9 or 10..13, then new value 14.
4. Current value 14 or 15, then leave value unchanged.

The following sub-process in the loop in Fig. 2 relates to trimming the new contour formed in the first sub-process. All origins that have been added to said new contour description during said last stripping operation arc examined. By examining the 'contour neighbourhood' of said origins it is possible to assess whether said origins have a form that is essentially enough to be able to start to form a new branch. If this is not the case the 'projection' is removed from the contour description by 'skipping' a number of successive contour points, that is to say deleting these from the list of two-dimensional coordinates. The criteria in the assessment process have been so chosen that in practice skeletons are produced which do not have too many or too few branches. Said criteria can be expanded as required, for example to obtain more substantial trimming. In principle, criteria other than those used here are also possible.

The process implemented in this illustrative embodiment functions as follows. A contour point number k of the last contour is a new origin if it meets two requirements. Firstly, it must have been produced during said last generation and thus may not be a copy or repeat of a skeleton point already produced previously. This can be determined on the basis of an iteration number associated with said point that, for all contour points, is updated during the iterative erosion process. With this procedure only the newly generated points are given the number of the last stripping operation, whilst the number of the skeleton points already produced is no longer changed. An additional advantage of this iteration number is that on completion of the skeleton process it is known for each skeleton point in which stripping iteration it was produced, so that in fact the original pattern thickness at these locations is known. Secondly, the contour point k must be an origin and thus, the contour points k-1 and k+1 must have the same two-dimensional coordinates. Such an origin can have been produced in a direction according to the grid or 'at 45 degrees'. See Figure 7 for a few examples.

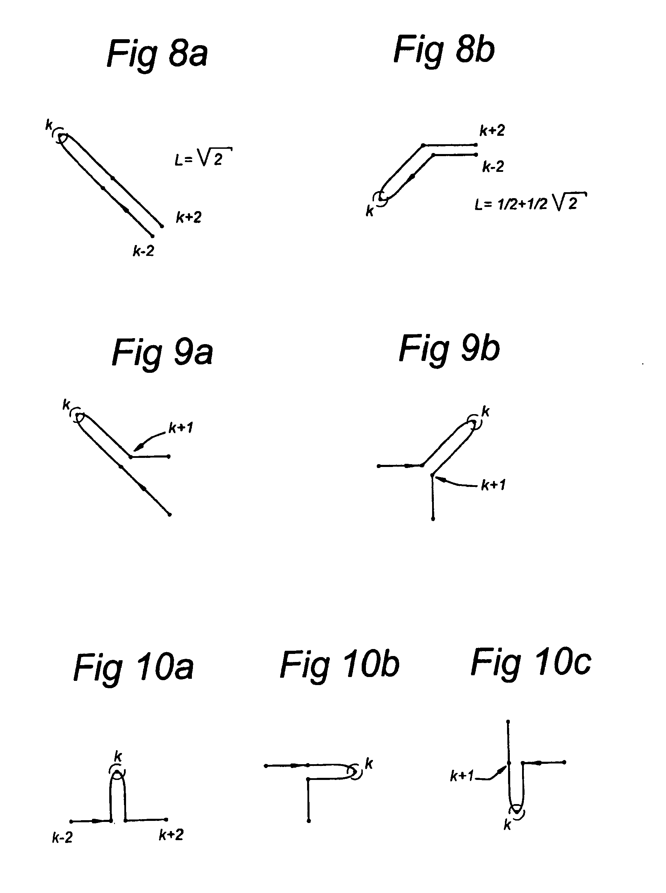

As far as the criteria are concerned, the origins located diagonally on the grid are now dealt with first. For this purpose we examine points k-2 and k+2 along the contour. If these two points also have the same coordinates, we then designate the origin essential because the 'length' of the branch just produced is then always greater than one pixel width. A few examples are shown in Figure 8. However, if said two points do not have the same coordinates, then there is then a non-essential origin with a branch length of ½*√2, i.e. a length of less than one pixel width. Such an origin is thus removed from the contour description and specifically by simply skipping the points k and k+1. A few examples can be seen in Figure 9.

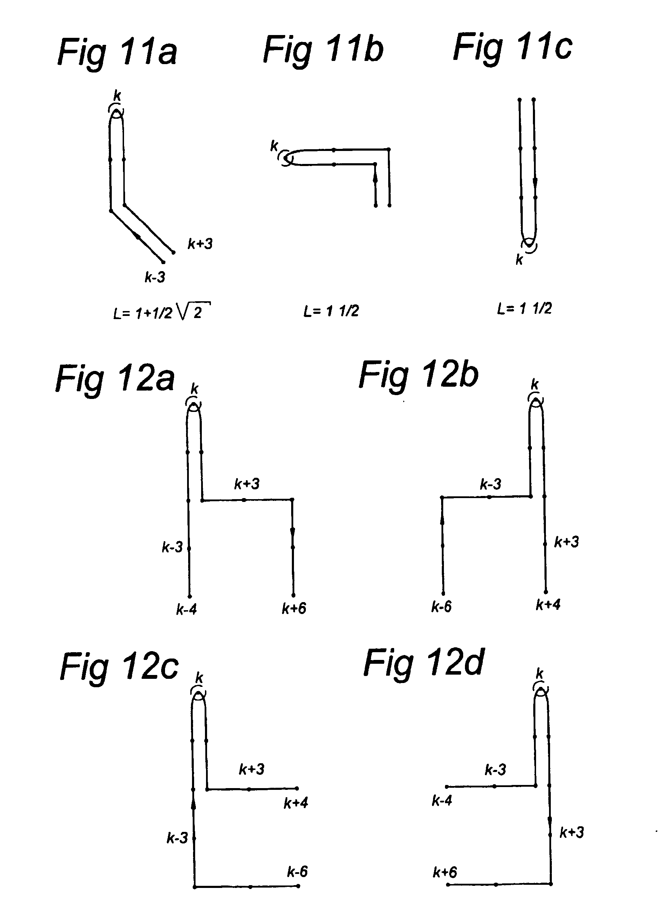

The assessment of the origins that have been produced in a direction that follows the grid is somewhat more complex. In this case the points k-2 and k+2 are also examined first and also in this case if the two points do not have the same coordinates the origin concerned is a non-essential origin, specifically with a branch length of only half a pixel width. See Figure 10 for a few examples. However, if the points k-2 and k+2 do have the same coordinates, further assessment then becomes somewhat more complex. It is found that in this case it is always the case that there is no bend in this part of the branch just formed and that the length of this part is thus one pixel width. Then we now examine the contour points k-3 and k+3. If these points also have the same coordinates, the origin is once again assessed as essential, irrespective of the precise contour path. See the examples in Figure 11.

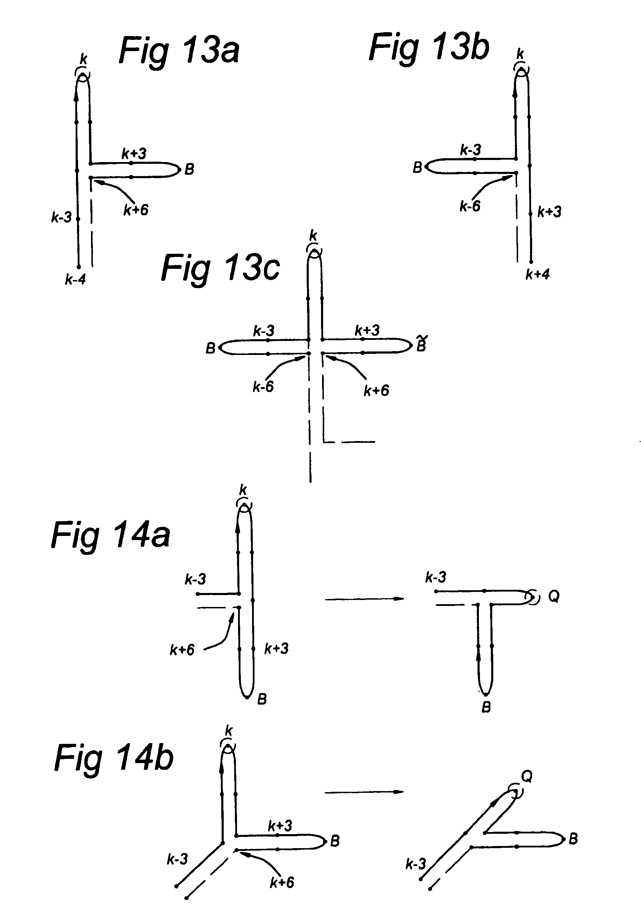

The assessment becomes more difficult only when the points k-3 and k+3 do not have the same coordinates. The main rule then is that the origin concerned is non-essential unless one of the situations still to be described in more detail exists. First of all these are the 4 situations in Figure 12 and the 12 situations that are produced from these by rotating 1, 2 or 3 times through 90 degrees. The reason why these origins are still designated as essential is the fact that in the original image there is a distinct 'wedge-shaped' projection in the contour at this location. The forms in Figure 12 are detected by examining points k-4 to k+6 and k-6 to k+4, respectively. In addition to the forms in Figure 12 there are also three origins, with location k-3 not the same as location k+3, that may not be deleted. Their forms are shown in Figure 13 and, once again by rotation, this figure gives 9 similar situations. These forms are also again detected by examining the points in that part of the figures not drawn in broken lines. The points B and B in Figure 13 are also origins of the 'location k-3 not the same as location k+3' type, but they do not have one of the forms of the origins indicated by k in Figure 13 and also do not have the forms in Figure 12. In other words, when the procedure reaches these points these 'side branches' will then be removed by the present trimming process. Actually, that is also precisely what is desired: the 'straight on' direction is preferred. Finally, in addition to the 7 forms (4 x 7 situations) in Figures 12 and 13 two special forms of the contour path around the candidate origin k can also arise for which a non-standard treatment is necessary to obtain clean skeletons that are not frayed. The latter means that the origin may remain but that the location and the associated branch length are adjusted. These two special forms are shown in Figure 14, as are their transformations. A further six similar situations are produced from this figure by rotating three times. The envisaged transformation is obtained by skipping the points k-1 and k+1 and moving the point k to the location Q. The origins B in Figure 14 will be completely deleted, just like those in Figure 13, by the present trimming process. The final effect is then a branch structure that is not frayed and runs 'cleanly' straight on.

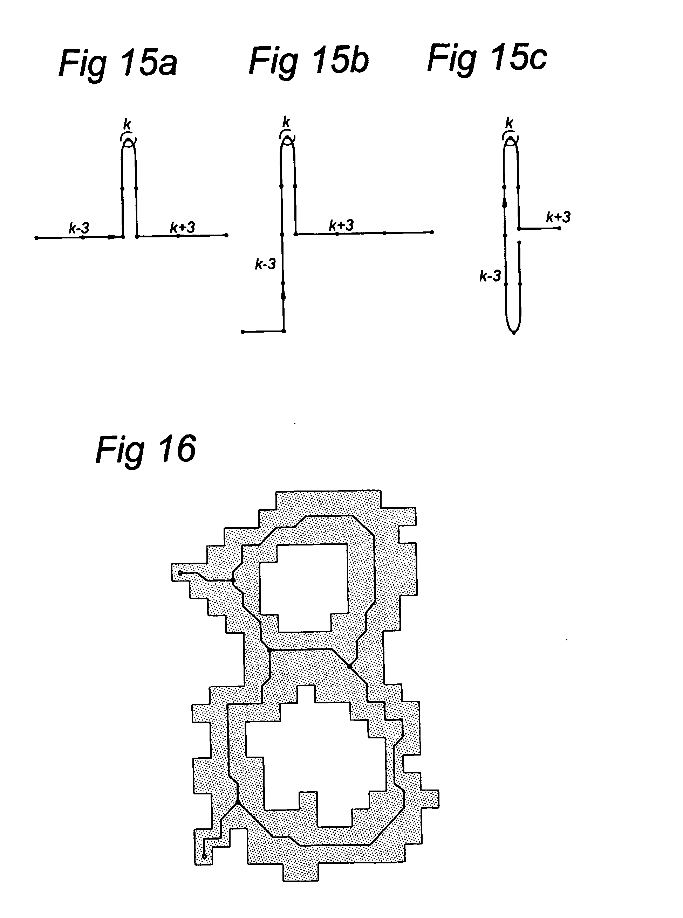

All other forms of origins with location k-3 not the same as location k+3, which thus do not fall under one of the forms in Figures 12 to 14, are thus completely deleted. For these situations such deletion consists in skipping the points k-1, k, k+1 and k+2 in the contour description. A few of these situations are shown as an example in Figure 15. The complete trimming process 21b is implemented by first working through the contour once and during this operation marking the points that have to be skipped as well as the points that have to be shifted, such as the origins k in Figure 14. Only then is the contour worked through once more and during this operation the list of contour points is cleaned up. Thus, in the first 'round', points are not yet eliminated or shifted but only marked. This is a safe method where the detection of the defined forms always takes place correctly since the contour has not yet been altered.

Using the contour trimmed in accordance with the above procedure, the (coding and) stripping process 21a is then worked through again via the loop and this is followed by the trimming process 21b again, etc. These iterations are continued until no further single contour point is shifted. At that point in time the decision block 21c ensures that the iterative erosion process is terminated. The final contour that is produced by the stripping process 21a is then the same as the last-but-one contour and has thus already been trimmed. The final result obtained is the contour description of an infinitely thin image and thus, in fact, the skeleton has been delivered in a specific form.

The third main process 22 comprises the transformation of the contour skeleton description produced by the iterative erosion process into a description of all origins and nodes and the branches located between them. The skeleton contour produced is the final contour from the iterative erosion process 21. With the aid of the two-dimensional code array or count array it is then possible to determine how often said final contour passes all skeleton locations. For the origins this is once, for the nodes 3 to a maximum of 8 times and for the 'internal' points of the branches, which are located between said special points, exactly twice. The final contour is then worked through one last time and during this operation the list of branches is generated. As soon as a first special point is encountered, which can seen from 'counter not equal to 2', storage of the first branch is started where, in sequence, the two-dimensional coordinates and the iteration number of the contour/skeleton points passed are placed in a list. Storage of said branch ends as soon as a following special point is encountered. The first and the last point of a branch are thus always a special point. Additional data can also be stored per branch, as required, for example the 'branching value' of the first and the last point (1 = origin, 3..8 = node). Immediately following completion of the storage of one branch, a start is made with the start of a new branch. However, this storage of that new branch is cancelled if the first two points of that branch are found to be exactly the same as the last two points of one of the branches that have already been included in the list of branches. The situation is then that the contour starts to run through a branch that has already been stored in the opposite direction. Thus, in this case nothing is stored until the next special point and the above process starts again at this point.

Finally, the list of special points is generated from the list of branches, a specific quantity of data, for example the two-dimensional coordinates, the iteration number and the branching value, being stored per special point, as required. The procedure starts with the first branch and the data for the first point are stored under number 1 in the list of special points. The last point of the same branch is generally stored as special point number 2, unless the coordinates are the same as those of the point already stored (in this case the branch forms a loop). In the event of such a situation, storage is cancelled. For the following branches both the first and the last point of these branches are compared with the special points already stored. This prevents origins and nodes being stored more than once. In this second round there is a relationship between the first and the last points of the branches and the numbers that the associated special points have acquired in the list concerned. By this means the data in the list of branches can optionally be 'enriched' with an index number for the first and last points that points to the position in the list of special points. The description chosen in this embodiment is one of the possibilities for describing a skeleton by means of special points and branches. Other or more extensive descriptions can also be derived from the skeleton contour. If the special points are shown by distinct dots and the branches by means of solid lines, a good image of this so-called basic skeleton is then obtained. One example produced by the complete process, including the trimming described, can be seen in Figure 16. In this figure it can readily be seen that as a result of the trimming the skeleton does not have too many branches.

A final, optional main process 23 comprises filtering or smoothing the branches. As can be seen from the example in Figure 16, the branches that are located between the special points look somewhat 'disturbed'. This arises because the process produces branch elements (the bits of line from point i to point i+1) that have only 8 possible directions. For certain purposes it is necessary to have access to branches that are somewhat 'smoother', for example in order to derive characteristics in which angular directions and curvatures play a part. Therefore a filter process has been designed where the special points stay where they are but the internal branch points located between them are 'shifted' by said filtering in such a way that smoothly running (smooth) branches are produced. In principle, many known approximation methods for describing a series of points in a flat plane can be used for this purpose. The process implemented in this embodiment has an adjustable 'strength', where the greatest strength produces the smoothest branches. The principle used is a so-called 'running' average over a selectable number of branch points. For example, in the case of a 'five point' filter the new coordinates for each branch point i are calculated on the basis of the following averaging:

$$Xn[i] = ( X[i-2] + X[i-1] + X[i] + X[i+1] + X[i+2] ) / 5$$

$$Yn[i] = ( Y[i-2] + Y[i-1] + Y[i] + Y[i+1] + Y[i+2] ) / 5$$

However, these equations present a problem when the vicinity of the first or last point of the branch concerned is reached, that is to say in the vicinity of the special points. It is then possible, for example, to make the filter width shorter the more closely the special point is approached. The filter then requires a width of only '1' at the special points themselves. By this means it can indeed be guaranteed that the special points stay where they are, but at the start and end of a branch this variable filter width gives a less smooth result than the method chosen here.

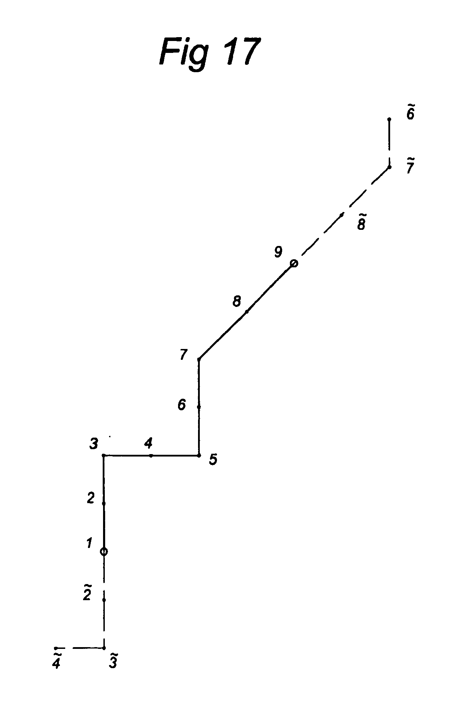

Therefore, at the start and the end of a branch to be filtered a piece of said branch is 'mirrored' at the special points concerned. The advantage of this is that the filter width (for example 5) may remain the same from the first branch point to the last branch point, whilst it is nevertheless guaranteed that the special points stay where they are. Such an 'imaginary' mirroring, for the bottom left branch in Figure 16, is shown in Figure 17. By, for example, mirroring the point 7 at point 9 we obtain the point $\tilde{7}$. Likewise, point $\tilde{3}$ is the mirror image of point 3 when we mirror at point 1. As a result of the mirroring, the five point filter chosen as an example thus also 'works', for example, at point 8:

$$X8n = ( X6 + X7 + X8 + X9 + X\tilde{8} ) / 5$$

$$Y8n = ( Y6 + Y7 + Y8 + Y9 + Y\tilde{8} ) / 5$$

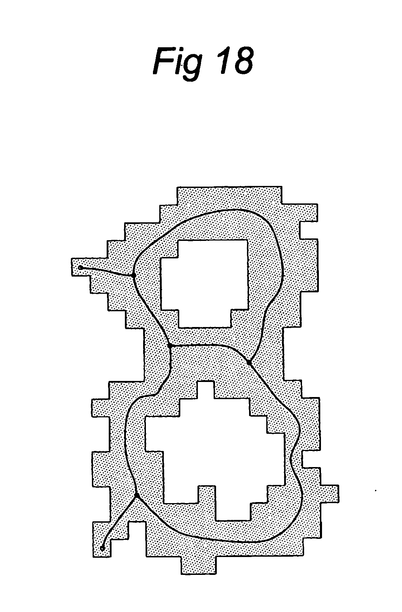

It will be clear that as a result of the mirroring these equations yield unchanged coordinates for points 1 and 9. The result of a seven point filter that has been applied to the basic skeleton in Figure 16 is shown in Figure 18. Finally, it is pointed out that the use of two filters one after the other, for example a seven point filter followed by a three point filter, yields a so-called convolution filter with an effect that is somewhat different again.

The skeleton description thus obtained can be fed to the further processor 12, in which, for example, character recognition is carried out. It is found that the present invention can be used in particular in automatic character recognition of cursive script, in particular in segmenting the image into separate characters or character parts.

## Claims

1.   Method for obtaining an output in skeleton form that is a simplified representation of a pixel image with pixels joined together, comprising:

converting the pixel image with pixels of the boundaries of binary patterns joined together into a contour listing, where a contour listing consists of one or more series of two-dimensional contour points, each series representing a closed contour, where the distance between successive contour points is one pixel width, **characterised in that** the method further comprises

doubling the number of contour points by defining an additional point between two successive contour points, as a result of which the distance between two successive contour points is half a pixel width;

repeated stripping of the image described by the contour listing by repeated generation of a new contour listing by analysis of each series of the two-dimensional contour points with all series being processed in turns until the new contour listing describes an image that has zero thickness throughout and thus describes the output in skeleton form,

wherein stripping is done by generating zero, one, two or three points in the new contour listing for each contour point, depending on said contour point, the preceding contour point and the following contour point in the contour listing and depending on the other contour points in the contour listing which have the same two-dimensional coordinates with the respective associated preceding contour point and following contour point,

wherein said new points either have the same coordinates as the old contour point or have been shifted over a distance of half a pixel width in the X direction and/or the Y direction towards the inside of the binary pattern described by the contour listing.

2. Method according to Claim 1, wherein a code array with a specific range of two-dimensional addresses is stored and wherein stripping comprises:

   - working through the series or number of series of contour points in the contour listing;
   - depending on the value of the situation indicator already present in the code array at the address belonging to the contour point and the preceding and following contour point in the series, determining an updated situation indicator and storing this at the same address;
   - again working through the contour listing point by point and generating a new contour listing on the basis of the respective situation indicators in the code array.

3. Method according to Claim 2, wherein the contour points are located on a two-dimensional grid, the grid spacing corresponding to half a pixel width and the situation indicator being a hexadecimal code.

4. Method according to one of Claims 1 to 3, further comprising trimming the new contour listing produced after a stripping operation, wherein trimming comprises:

   assessing whether an origin produced during this stripping operation is an essential or a non-essential origin and removing the non-essential origins from the series or number of series of contour points in the contour listing,

   wherein an origin is a contour point for which the immediately preceding and immediately following contour point in the series have the same coordinates.

5. Method according to Claim 4, wherein an iteration number that indicates the iteration pass in which the contour point concerned was generated for the first time is assigned to each contour point in the contour listing.

6. Method according to Claim 4 or 5, wherein the assessment of whether an origin is an essential or a non-essential origin is dependent on one or more preceding and one or more following contour points in the series.

7. Method according to one of Claims 4, 5 or 6, wherein trimming comprises:

   working through the series of contour points;
   depending on one or more preceding and one or more following contour points from the series or number of series of contour points, assigning a trim indicator to the contour point and to one or more preceding and/or following contour points;
   working through the series of contour points again and constructing a new series of contour points on the basis of the trim indicator.

8. Method according to one of Claims 1 to 7, comprising transforming the contour listing made up of the series or number of series of contour points with associated image with zero thickness into a listing of the origins and nodes and branches between the origins and nodes in said image.

9. Method according to Claim 8, wherein transformation comprises:

   maintaining a count in the code array of two-dimensional addresses which indicates how often a specific two-dimensional coordinate occurs in the contour listing that represents the image of zero thickness;
   extracting a branch by storing successive contour points in the series for which the count in the code array at the associated two-dimensional address is two, supplemented by branch points, the branch points being formed by the predecessor of the first point and the successor of the last point;
   storing special contour points from the series for which the count in the code array is one or more than two.

10. Method according to Claim 9, wherein an extracted branch for which the first two contour points are coincident with the last two contour points of a branch already stored is not stored.

11. Method according to Claim 9 or 10, wherein an extracted branch is spatially filtered, for example by determining a running average of the respective two-dimensional coordinate valuers.

12. Device for obtaining an output in skeleton form that is a simplified representation of a pixel image with pixels joined to one another, comprising:

a detector (11) for capturing the pixel image;
processing means (10) that are connected to the detector (11), wherein the processing means (20) are equipped for:

converting the pixel image with pixels of the boundaries of binary patterns joined to one another into a contour listing, where a contour listing consists of one or more series of two-dimensional contour points, each series representing a closed contour, where the distance between successive contour points is one pixel width,

**characterised in that** the processing means (10) are further equipped for:

doubling the number of contour points by defining an additional point between two successive contour points, as a result of which the distance between two successive contour points is half a pixel width;
repeated stripping of the image described by the contour listing by repeated generation of a new contour listing by analysis of each series of the two-dimensional contour points with all series being processed in turns until the new contour listing describes an image which has zero thickness throughout and thus describes the output in skeleton form,

wherein stripping is done by generating zero, one, two or three points in the new contour listing for each contour point, depending on said contour point, the preceding contour point and the following contour point in the contour listing and depending on the other contour points in the contour listing which have the same two-dimensional coordinates with the respective associated preceding contour point and following contour point,
wherein said new points either have the same coordinates as the old contour point or have been shifted over a distance of half a pixel width in the X direction and/or the Y direction towards the inside of the binary pattern described by the contour listing.

13. Device according to Claim 12, wherein the processing means are furthermore equipped for carrying out the method according to one of Claims 2 to 11.

14. Computer program product comprising computer-readable code, wherein, after loading in a computer, the computer-readable code provides the computer with the functionality of the method according to one of Claims 1 to 11.

**Patentansprüche**

1. Verfahren zum Vorsehen einer Ausgabe in Skelettform, die eine vereinfachte Wiedergabe eines Pixelbilds mit zusammengefügten Pixel ist, umfassend:

Umwandeln des Pixelbilds mit Pixel der Grenzen von binären Strukturen, die in einer Konturauflistung zusammengefügt sind, wobei eine Konturauflistung aus einer oder mehreren Folgen zweidimensionaler Konturpunkte besteht, wobei jede Folge eine geschlossene Kontur wiedergibt, wobei die Entfernung zwischen zwei aufeinander folgenden Konturpunkten die Breite eines Pixels aufweist, **dadurch gekennzeichnet, dass** das Verfahren ferner umfasst:

Verdoppeln der Anzahl an Konturpunkten durch Definieren eines weiteren Punkts zwischen zwei aufeinander folgenden Konturpunkten, wodurch der Abstand zwischen zwei aufeinander folgenden Konturpunkten die Hälfte der Breite eines Pixels beträgt;
Wiederholtes Abziehen des von der Konturauflistung beschriebenen Bildes durch wiederholtes Erzeugen einer neuen Konturauflistung durch Analyse jeder Folge der zweidimensionalen Konturpunkte, wobei alle Folgen im Wechsel verarbeitet werden, bis die neue Konturauflistung ein Bild beschreibt, das durchgehend eine Dicke von Null aufweist und somit die Ausgabe in Skelettform beschreibt, wobei das Abziehen ausgeführt wird durch Erzeugen von null, ein, zwei oder drei Punkten in der neuen Konturauflistung für jeden Konturpunkt, abhängig von dem Konturpunkt, dem vorangehenden Konturpunkt und dem folgenden Konturpunkt in der Konturauflistung, und abhängig von den anderen Konturpunkten in der Konturauflistung, die die gleichen zweidimensionalen Koordinaten mit den jeweiligen zugeordneten vorangehenden Konturpunkten und Folgekonturpunkten aufweisen, wobei die zwei Punkte entweder die gleichen Koordinaten wie der alte Konturpunkt aufweisen, oder über eine Entfernung von der halben Breite eines Pixels in X-Richtung und/oder in Y-Richtung zum Inneren der Binärstruktur verschoben wurden, die von der Konturauflistung beschrieben ist.

2. Verfahren nach Anspruch 1, wobei ein Codearray mit einem spezifischen Bereich von zweidimensionalen Adressen gespeichert ist, und wobei das Abziehen umfasst:

- Durchgehen der Folge oder Anzahl von Folgen von Konturpunkten in der Konturauflistung;
- Bestimmen eines aktualisierten Situationsindikators abhängig von dem Wert des Situationsindikators, der bereits in dem Codearray bei der Adresse vorliegt, die dem Konturpunkt und dem vorangehenden und nächsten Konturpunkt in der Folge angehört, und Speichern des Situationsindikators unter der selben Adresse;
- wiederholtes punktweises Durchgehen durch die Konturauflistung und Erzeugen einer neuen Konturauflistung auf der Basis der jeweiligen Situationsindikatoren in dem Codearray.

3. Verfahren nach Anspruch 2, wobei die Konturpunkte auf einem zweidimensionalen Raster angeordnet sind, wobei der Rasterabstand einer halben Breite eines Pixels entspricht und der Situationsindikator ein hexadezimaler Code ist.

4. Verfahren nach einem der Ansprüche 1 bis 3, die ferner das Beschneiden der Konturlisten umfasst, die nach einem Abziehschritt erzeugt wurde, wobei das Beschneiden umfasst:

Ermitteln, ob ein während dieses Abziehschritts erzeugter Ursprung ein wesentlicher oder ein unwesentlicher Ursprung ist, und Entfernen der unwesentlichen Ursprünge von in der Konturliste vorliegenden Folge oder Anzahl von Folgen von Konturpunkten, wobei ein Ursprung ein Konturpunkt ist, für den der direkt vorangehende und der direkt darauf folgende Konturpunkt in der Folge die gleichen Koordinaten aufweisen.

5. Verfahren nach Anspruch 4, wobei eine Iterationsnummer, welche den Iterationsdurchlauf angibt, in der der betreffende Konturpunkt zum ersten Mal erzeugt wurde, jedem Konturpunkt in der Konturauflistung zugeordnet ist.

6. Verfahren nach einem der Ansprüche 4 oder 5, wobei das Ermitteln, ob ein Ursprung ein wesentlicher oder ein unwesentlicher Ursprung ist, von einem oder mehreren vorangehenden oder einem oder mehreren folgenden Konturpunkten in der Folge abhängt.

7. Verfahren nach einem der Ansprüche 4, 5 oder 6, wobei das Beschneiden umfasst:

Durchgehen der Folge von Konturpunkten;
Abhängig von einem oder mehreren vorangehenden und einem oder mehreren folgenden Konturpunkten der Folge oder Anzahl von Folgen von Konturpunkten, Zuordnen eines Beschneidungsindikators zu dem Konturpunkt und zu dem ein oder mehreren vorangehenden und/oder folgenden Konturpunkten;
Erneutes Durchgehen der Folge von Konturpunkten und Erzeugen einer neuen Folge von Konturpunkten auf der Basis des Beschneidungsindikators.

8. Verfahren nach einem der Ansprüche 1 bis 7, umfassend: Transformieren der Konturauflistung, die aus der Folge oder Anzahl von Folgen von Konturpunkten mit einem zugehörigen Bild mit einer Dicke von null besteht, in eine Auflistung der Ursprünge und Knoten und Zweige, die zwischen den Ursprüngen und Knoten in dem Bild bestehen.

9. Verfahren nach Anspruch 8, wobei das Transformieren umfasst:

Führen eines Zählers in dem Codearray zweidimensionaler Adressen, der angibt, wie oft eine spezifische zweidimensionale Koordinate in der Konturauflistung auftritt, die das Bild wiedergibt, welche eine Dicke von null hat;
Extrahieren eines Zweigs durch Speichern sukzessiver Konturpunkte in der Folge, für welchen der Zähler in dem Codearray bei der zugehörigen zweidimensionalen Adresse zwei ist, unterstützt von Zweigpunkten, wobei die Zweigpunkte durch den Vorangehenden des ersten Punkts und den Nachfolger des letzten Punkts vorgesehen sind;
Speichern spezieller Konturpunkte aus der Folge, für die der Zähler in dem Codearray eins oder mehr als zwei ist.

10. Verfahren nach Anspruch 9, wobei ein extrahierter Zweig, für den die zwei Konturpunkte mit den letzten zwei Konturpunkten eines bereits gespeicherten Zweigs zusammenfallen, nicht gespeichert wird.

11. Verfahren nach Ansprüchen 9 oder 10, wobei ein extrahierter Zweig räumlich gefiltert wird, beispielsweise durch Ermitteln eines laufenden Mittelwerts der betreffenden zweidimensionalen Koordinatenwerte.

12. Vorrichtung zum Vorsehen einer Ausgabe in Skelettform, die eine vereinfachte Wiedergabe eines Pixelbilds ist, bei dem Pixel aneinandergefügt sind, umfassend:

einen Detektor (11) zum Erfassen des Pixelbilds;
eine Verarbeitungsmittel (10), die mit dem Detektor (11) verbunden sind, wobei die Verarbeitungsmittel (20) eingerichtet sind, um: das Pixelbild mit Pixeln der Grenzen von binären Strukturen zu konvertieren, die in einer Konturliste zusammengefügt sind, wobei eine Konturliste aus einer oder mehreren Folgen von zweidimensionalen Konturpunkten besteht, wobei jede Folge eine geschlossene Kontur wiedergibt, wobei der Abstand zwischen aufeinander folgenden Konturpunkten der Breite eines Pixels entspricht, **dadurch gekennzeichnet, dass** die Verarbeitungseinrichtung (10) ferner eingerichtet ist, um:

die Anzahl von Konturpunkten zu verdoppeln, indem ein zusätzlicher Punkt zwischen zwei aufeinander folgenden Konturpunkten definiert wird, wodurch ihr Abstand zwischen zwei aufeinander folgenden Konturpunkten der halben Breite eines Pixels entspricht;
wiederholtes Abziehen des Bildes, das von der Konturauflistung beschrieben ist, durch wiederholte Erzeugung einer neuen Konturauflistung durch Analyse jeder der Folgen der zweidimensionalen Konturpunkte, wobei alle Folgen im Wechsel verarbeitet werden, bis die neue Konturauflistung ein Bild beschreibt, das durchgehend eine Dicke von null aufweist und somit die Ausgabe in Skelettform beschreibt,

wobei das Abziehen ausgeführt wird durch Erzeugen von null, einem, zwei oder drei Punkten in der neuen Konturauflistung für jeden Konturpunkt, abhängig von dem Konturpunkt, dem vorangehenden Konturpunkt und dem folgenden Konturpunkt in der Konturliste und abhängig auf den anderen Konturpunkten in der Konturliste, die die gleichen zweidimensionalen Koordinaten mit dem betreffenden zugeordneten vorangehenden Konturpunkt und folgenden Konturpunkt aufweisen,
wobei die neuen Punkte entweder die gleichen Koordinaten wie die alten Punkte aufweisen oder um eine Distanz von der Hälfte einer Pixelbreite in X-Richtung und/oder in Y-Richtung zur Innenseite der binären Struktur hin verschoben wurden, welche durch die Konturauflistung beschrieben wird.

13. Vorrichtung nach Anspruch 12, wobei die Verarbeitungseinrichtung ferner eingerichtet ist, um das Verfahren nach einem der Ansprüche 2 bis 11 auszuführen.

14. Computerprogrammprodukt mit computerlesbarem Code, wobei, nachdem dieses in einen Computer geladen wurde, der computerlesbare Code den Computer mit der Funktionalität des Verfahrens gemäß einem der Ansprüche 1 bis 11 versieht.

**Revendications**

1. Procédé pour obtenir une sortie sous la forme d'un squelette qui est une représentation simplifiée d'une image de pixels avec des pixels joints ensemble, comprenant :

la conversion de l'image de pixels avec des pixels des frontières de profils binaires joints ensemble en un listage de contour, où un listage de contour consiste en une ou plusieurs séries de points de contour bidimensionnels, chaque série représentant un contour fermé, où la distance entre les points de contour successifs est la largeur d'un pixel, **caractérisé en ce que** le procédé comprend en outre
la duplication du nombre de points de contour par la définition d'un point supplémentaire entre deux points de contour successifs, à la suite de quoi la distance entre deux points de contour successifs est d'une demi-largeur de pixel ;
un dépouillement répété de l'image décrite par le listage de contour par la génération répétée d'un nouveau listage de contour par analyse de chaque série de points de contour bidimensionnels, toutes les séries étant traitées tour à tour jusqu'à ce que le nouveau listage de contour décrive une image ayant une épaisseur nulle et décrive ainsi la sortie sous forme de squelette,

dans lequel le dépouillement est effectué par la génération de zéro, un, deux ou trois points dans le nouveau listage de contour pour chaque point de contour, en fonction dudit point de contour, du point de contour précédent et du point de contour suivant dans le listage de contour et en fonction des autres points de contour dans le listage de contour qui ont les mêmes coordonnées bidimensionnelles avec le point de contour précédent et le point de contour suivant associés respectifs,
dans lequel lesdits nouveaux points ont les mêmes coordonnées que l'ancien point de contour ou ont été décalés sur une distance d'une demi-largeur de pixel dans la direction X et/ou la direction Y vers l'intérieur du profil binaire décrit par le listage de contour.

2.  Procédé selon la revendication 1, dans lequel une matrice de code avec une gamme spécifique d'adresses bidimensionnelles est stockée et dans lequel le dépouillement comprend :

    - la prise en compte de la série ou du nombre de séries de points de contour dans le listage de contour ;
    - en fonction de la valeur de l'indicateur de situation déjà présent dans la matrice de code à l'adresse appartenant au point de contour et aux points de contour précédent et suivant dans la série, une détermination d'un indicateur de situation mis à jour et le stockage de celui-ci à la même adresse ;
    - la nouvelle prise en compte d'un listage de contour point par point et la génération d'un nouveau listage de contour sur la base des indicateurs de situation respectifs dans la matrice de code.

3.  Procédé selon la revendication 2, dans lequel les points de contour sont situés sur une grille bidimensionnelle, l'espacement de grille correspondant à une demi-largeur de pixel et l'indicateur de situation étant un code hexadécimal.

4.  Procédé selon l'une quelconque des revendications 1 à 3, comprenant en outre le rognage du nouveau listage de contour produit à travers une opération de dépouillement, dans lequel le rognage comprend :

    l'évaluation du caractère essentiel ou non essentiel d'une origine produite pendant cette opération de dépouillement et l'élimination des origines non essentielles de la série ou du nombre de séries de points de contour dans le listage de contour,

    dans lequel une origine est un point de contour pour lequel les points de contour précédents et immédiatement suivants dans la série ont les mêmes coordonnées.

5.  Procédé selon la revendication 4, dans lequel un nombre d'itération qui indique le passage d'itération dans lequel le point de contour concerné a été généré pour la première fois est attribué à chaque point de contour dans le listage de contour.

6.  Procédé selon la revendication 4 ou 5, dans lequel l'évaluation du caractère essentiel ou non essentiel d'une origine dépend d'un ou plusieurs points de contour précédents et d'un ou plusieurs points de contour suivants dans la série.

7.  Procédé selon l'une quelconque des revendications 4, 5 ou 6, dans lequel le rognage comprend :

    la prise en compte de la série de points de contour ;
    en fonction d'un ou plusieurs points de contour précédents et d'un ou plusieurs points de contour suivants provenant de la série ou du nombre de séries des points de contour, l'attribution d'un indicateur de rognage au point de contour et à un ou plusieurs points de contour précédents et/ou suivants ;
    la prise en compte de la série de points de contour une nouvelle fois et la construction d'une nouvelle série de points de contour sur la base de l'indicateur de rognage.

8.  Procédé selon l'une quelconque des revendications 1 à 7, comprenant la transformation du listage de contour constitué de la série ou du nombre de séries des points de contour avec une image associée à une épaisseur nulle en un listage des origines et des noeuds ainsi que des branches entre les origines et les noeuds dans ladite image.

9.  Procédé selon la revendication 8, dans lequel la transformation comprend :

    le maintien d'un compte dans la matrice de code d'adresses bidimensionnelles qui indique la fréquence d'occurrence d'une coordonnée bidimensionnelle dans le listage de contour qui représente l'image d'épaisseur nulle ;
    l'extraction d'une branche par stockage de points de contour successifs dans la série pour laquelle le compte dans la matrice de code à l'adresse bidimensionnelle associée est deux, complétée par des points de branche, les points de branche étant formés par le prédécesseur du premier point et le successeur du dernier point ;

le stockage de points de contour spéciaux à partir de la série pour laquelle le compte dans la matrice de code est un ou plus de deux.

10. Procédé selon la revendication 9, dans lequel une branche extraite pour laquelle les deux premiers points de contour coïncident avec les deux derniers points de contour d'une branche déjà stockée n'est pas stockée.

11. Procédé selon la revendication 9 ou 10, dans lequel une branche extraite est filtrée spatialement, par exemple par la détermination d'une moyenne glissante des valeurs de coordonnées bidimensionnelles respectives.

12. Dispositif pour obtenir une sortie sous la forme d'un squelette qui est une représentation simplifiée d'une image de pixels avec des pixels joints les uns aux autres, comprenant :

un détecteur (11) pour capture l'image de pixels ;
des moyens de traitement (10) qui sont reliés au détecteur (11), dans lequel les moyens de traitement (20) sont équipés pour :

convertir l'image de pixels avec des pixels des frontières de profils binaires joints les uns aux autres dans un listage de contour, dans lequel un listage de contour consiste en une ou plusieurs séries de points de contour bidimensionnels, chaque série représentant un contour fermé, où la distance entre les points de contour successifs est une largeur de pixel,

**caractérisé en ce que** les moyens de traitement (10) sont en outre équipés pour :

dupliquer le nombre de points de contour par la définition d'un point supplémentaire entre deux points de contour successifs, à la suite de quoi la distance entre deux points de contour successifs est d'une demi-largeur de pixel ; dépouiller de manière répétée l'image décrite par le listage de contour par la génération répétée d'un nouveau listage de contour par analyse de chaque série de points de contour bidimensionnels, toutes les séries étant traitées tour à tour jusqu'à ce que le nouveau listage de contour décrive une image ayant une épaisseur nulle et décrive ainsi la sortie sous forme de squelette,

dans lequel le dépouillement est effectué par la génération de zéro, un, deux ou trois points dans le nouveau listage de contour pour chaque point de contour, en fonction dudit point de contour, du point de contour précédent et du point de contour suivant dans le listage de contour et en fonction des autres points de contour dans le listage de contour qui ont les mêmes coordonnées bidimensionnelles avec le point de contour précédent et le point de contour suivant associés respectifs,
dans lequel lesdits nouveaux points ont les mêmes coordonnées que l'ancien point de contour ou ont été décalés sur une distance d'une demi-largeur de pixel dans la direction X et/ou la direction Y vers l'intérieur du profil binaire décrit par le listage de contour.

13. Dispositif selon la revendication 12, dans lequel les moyens de traitement sont en outre équipés pour exécuter le procédé selon l'une des revendications 2 à 11.

14. Produit de programme informatique comprenant un code lisible par ordinateur, dans lequel, après chargement dans un ordinateur, le code lisible par ordinateur donne à l'ordinateur la fonctionnalité du procédé selon l'une des revendications 1 à 11.

# Fig 1

# Fig 3

| Contourpoint number | x-coordinate | y-coordinate | Iteration number | Trimlabel |
|---|---|---|---|---|
| 1 | 4 | 4 | 2 | N |
| 2 | 5 | 4 | 2 | N |
| 3 | 6 | 4 | 2 | N |
| 4 | 7 | 4 | 2 | N |
| 5 | 8 | 4 | 2 | N |
| 6 | 8 | 5 | 2 | Y |
| 7 | 8 | 6 | 2 | Y |
| 8 | 8 | 5 | 2 | Y |
| . | . | . | . | . |
| . | . | . | . | . |
| . | . | . | . | . |

## Fig 2

```
                    ┌──────────────┐
                    │    Start     │
                    └──────┬───────┘
                           │
                           ▼
                    ╱──────────────╲
                   ╱ Contour        ╲
                  ╱  process         ╲──── 20
                 └──────────┬─────────┘
                           │
        ┌──────────────────┼─────────────────────────┐
        │                  ▼                          │
        │          ╱──────────────╲                   │
        │         ╱ Stripping      ╲                  │
        │        ╱  process         ╲                 │
        │       └─────────┬──────────┘                │
        │         21a     │         ╱──────────────╲  │
        │                 │        ╱ Trimming       ╲ │
        │                 │       ╱  process         ╲│
        │                 ▼      └──────┬─────────────┘│
        │              ╱─────╲    21b                 │
        │             ╱ Image ╲                       │
        │            ╱ thickness╲───N──────────────────
        │            ╲  = zero  ╱
        │             ╲       ╱
        │        21c   ╲─────╱   Y    Iterative erosion process
        └────────────────┼───────────────────────────┘
                         │                          21
                         ▼
                  ╱──────────────╲
                 ╱ extraction of  ╲
                ╱  nodes and       ╲
               ╱   branches         ╲
              └──────────┬───────────┘
          22            │
                         ▼
                  ╱──────────────╲
                 ╱ Branch         ╲
                ╱  smoothing       ╲
               └──────────┬─────────┘
          23             │
                         ▼
                  ┌──────────────┐
                  │     End      │
                  └──────────────┘
```

## Fig 4a

## Fig 4b

## Fig 4c

## Fig 4d

## Fig 4e

## Fig 4f

## Fig 4g

## Fig 4h

## Fig 4i

## Fig 4j

## Fig 4k

## Fig 4l

## Fig 5

## Fig 6

## Fig 7a    Fig 7b    Fig 7c    Fig 7d

## Fig 8a

$L = \sqrt{2}$

k

k+2

k-2

## Fig 8b

k+2

k-2

k

$L = 1/2 + 1/2\sqrt{2}$

## Fig 9a

k

k+1

## Fig 9b

k

k+1

## Fig 10a

k

k-2

k+2

## Fig 10b

k

## Fig 10c

k+1

k

## Fig 11a

$L = 1 + 1/2 \sqrt{2}$

## Fig 11b

$L = 1\ 1/2$

## Fig 11c

$L = 1\ 1/2$

## Fig 12a

## Fig 12b

## Fig 12c

## Fig 12d

Fig 13a

Fig 13b

Fig 13c

Fig 14a

Fig 14b

EP 1 538 547 B1

*Fig 15a*  *Fig 15b*  *Fig 15c*

*Fig 16*

28

# Fig 17

Fig 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6377710 B

### Non-patent literature cited in the description

- **F.. SHIH et al.** A New Safe-Point Thinning Algorithm Based on the Mid-Crack Code Tracing. *IEEE Transactions on Systems, Man and Cybernetics,* February 1995, vol. 25 (2), 370-378

- **C. ARCELLI et al.** Medial Lines by Parallewise Erosion of Successive Contour Pairs. *IEEE Region 10 Conference,* vol. 92, 66-70